# FASCICULE DE BREVET EUROPEEN

(11) **EP 3 732 764 B1**
(45) Date de publication et mention de la délivrance du brevet: **05.07.2023**
(21) Numéro de dépôt: 18842449.3
(22) Date de dépôt: 24.12.2018
(51) Int. Cl.: H02J 7/00, H01M 10/00

(54) **BATTERIE D'ACCUMULATEURS ELECTRIQUES**
BATTERIEPACK
BATTERY PACK

(30) Priorité: 27.12.2017 FR 1763252
(43) Date de publication de la demande: 04.11.2020
(73) Titulaire: Commissariat à l'Energie Atomique et aux Energies Alternatives, 75015 Paris (FR)
(72) Inventeur: THOMAS, Remy, 38130 ECHIROLLES (FR); FERNANDEZ, Eric, 38760 SAINT PAUL DE VARCES (FR); BACQUET, Sylvain, 38470 CHASSELAY (FR); CASSARINO, Leandro, 33400 TALENCE (FR); DESPESSE, Ghislain, 38340 VOREPPE (FR); LOPEZ, Yan, 38140 RENAGE (FR)
(74) Mandataire: Cabinet Beaumont
(86) Numéro de dépôt international: PCT/FR2018/053544
(87) Numéro de publication internationale: WO 2019/129992

(56) Documents cités:
- WO-A1-2014/198929
- WO-A2-2012/030455
- GB-A- 2 537 616

## Description

### Domaine

La présente invention concerne une batterie d'accumulateurs électriques, également appelée pack batterie.

### Exposé de l'art antérieur

Il est connu de réaliser une batterie comprenant plusieurs étages ou modules dans chacun desquels des accumulateurs, également appelés cellules, peuvent être connectés en série ou en parallèle par des interrupteurs commandables. Un exemple est GB 2 537 616. Une telle batterie est adaptée à fournir une tension dont la forme d'onde peut varier dans le temps en faisant varier au cours du temps la connexion des cellules via la fermeture ou l'ouverture des interrupteurs.

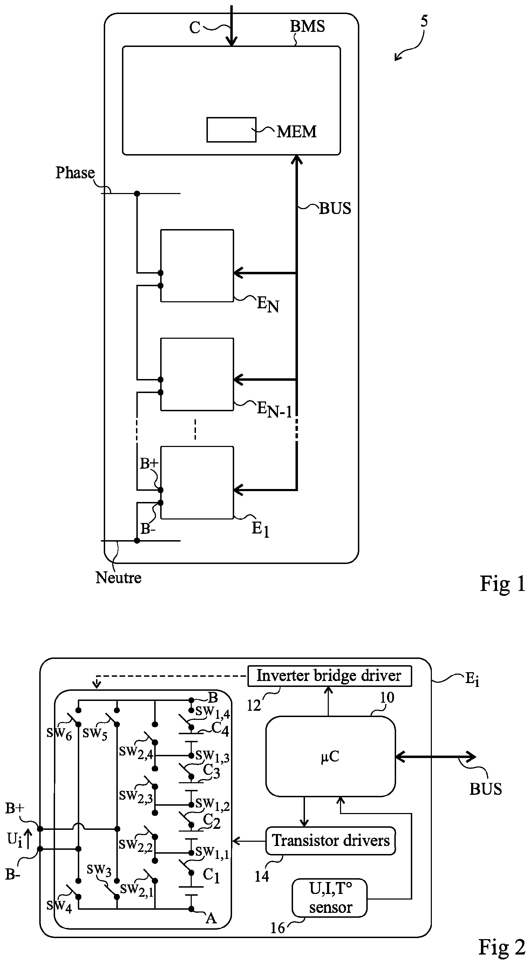

La figure 1 représente un exemple d'une telle batterie 5. La batterie 5 comprend N modules E₁ à E_{N}. Le nombre N est un nombre entier pouvant être compris entre 1 et 50. Chaque module comprend une borne positive B+ et une borne négative B- et plusieurs cellules, non représentées, pouvant être connectées entre elles en série et/ou en parallèle par l'intermédiaire d'interrupteurs, non représentés, entre les bornes B+ et B-. Les modules E₁ à E_{N} peuvent être connectés en série entre une première borne Neutre de la batterie 5 et une deuxième borne Phase de la batterie 5. Un exemple d'une telle batterie est décrit dans la demande de brevet WO 2012/117110.

La batterie 5 comprend un circuit BMS de commande des modules E₁ à E_{N}, appelé circuit de commande maître par la suite. Le circuit de commande maître BMS peut échanger des données avec chaque module E₁ à E_{N} par l'intermédiaire d'un bus bidirectionnel BUS de transmission de données. Chaque module E₁ à E_{N} comprend un circuit adapté à commander les interrupteurs du module à partir des commandes fournies par le circuit de commande maître BMS. Ce circuit de commande est appelé circuit de commande esclave par la suite.

Chaque module peut comprendre, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave de chaque module E₁ à E_{N} est adapté à transmettre au circuit de commande maître BMS des données représentatives des mesures de tensions, de courants et/ou de températures par le bus de transmission de données BUS. Le circuit de commande maître BMS peut, en outre, comprendre un capteur de la tension entre les bornes phase et neutre ainsi qu'un capteur de courant global et un capteur de température.

Le circuit de commande maître BMS est adapté à recevoir une consigne C et à sélectionner les cellules à connecter ou à déconnecter pour chaque module de façon à répondre à la consigne. La consigne C peut être une consigne de tension ou de courant, les cellules à connecter ou à déconnecter pour chaque module étant alors sélectionnées pour obtenir la tension et/ou le courant souhaités entre les bornes Phase et Neutre de la batterie 5. A titre de variante, la consigne C peut être une consigne d'un nombre d'accumulateurs à connecter en série et/ou en parallèle entre les bornes Phase et Neutre de la batterie 5, les cellules à connecter ou à déconnecter pour chaque module étant alors sélectionnées pour obtenir le nombre d'accumulateurs connectés en série et/ou en parallèle entre les bornes Phase et Neutre de la batterie 5 demandé par la consigne. Le circuit de commande maître BMS fournit alors des commandes aux modules par l'intermédiaire du bus de transmission de données BUS à partir desquelles le circuit de commande esclave de chaque module connecte ou déconnecte les cellules selon la configuration souhaitée.

Il est souhaitable que la sélection des cellules à connecter/déconnecter soit réalisée en assurant que chaque cellule fonctionne dans sa plage de fonctionnement optimale en fonction des mesures de tensions, de courants et de température fournies par les modules. En particulier, il est souhaitable de réaliser un équilibrage des cellules, c'est-à-dire que la sélection des cellules soit réalisée de façon que les écarts entre les états de charge des cellules soient en permanence les plus faibles possibles, et/ou que les écarts entre les courants pouvant être fournis par les cellules soient en permanence les plus faibles possibles et/ou que les écarts entre les températures des cellules soient en permanence les plus faibles possibles. Il est en outre souhaitable que la sélection des cellules tienne compte d'une éventuelle défaillance d'une cellule de façon, par exemple, à exclure cette cellule de la sélection.

Pour effectuer la fonction d'équilibrage, le circuit de commande maître BMS peut déterminer un classement des cellules selon des niveaux de priorité, les cellules les plus prioritaires du classement étant celles qui devraient être sélectionnées les premières. Le classement de priorités, également appelé table de priorités, est susceptible d'évoluer au cours du fonctionnement de la batterie, notamment suite à l'évolution des états de charges des cellules ou suite à la défaillance d'une cellule.

Il est souhaitable que le circuit de commande maître BMS tienne compte du classement de priorités lors de la détermination de la sélection de cellules et en particulier tienne compte de l'évolution du classement de priorités dans le temps.

Pour certaines applications, la consigne reçue par le circuit de gestion BMS peut varier rapidement de sorte qu'il peut être difficile pour le circuit de commande maître BMS de sélectionner les cellules à connecter/déconnecter pour suivre la consigne tout en prenant en compte une modification du classement de priorités.

### Résumé

L'objet de la protection recherchée est défini par la revendication indépendante de procédé 1 et la revendication indépendante de système 12. Les revendications dépendantes définissent des modes de réalisations spécifiques.

Ainsi, un mode de réalisation prévoit un procédé de commande d'une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques, correspondant chacune à un élément de stockage de charges électriques, et des interrupteurs reliant les accumulateurs électriques entre eux et aux troisième et quatrième bornes du module et un deuxième circuit de commande des interrupteurs, la batterie comprenant en outre au moins un premier bus de transmission de données reliant le premier circuit de commande à chaque deuxième circuit de commande, le premier circuit de commande comprenant une mémoire dans laquelle sont stockées des listes chaînées, chaque liste chaînée comprenant des éléments comprenant chacun un identifiant de l'un des accumulateurs électriques et au moins un premier pointeur désignant un autre élément de la liste chaînée, chaque liste chaînée comprenant un classement des identifiants de la liste chaînée selon au moins un critère choisi dans le groupe comprenant la température de la cellule électrique, le taux de charge de la cellule électrique, la tension aux bornes de la cellule électrique, l'impédance interne de la cellule électrique, et l'état de santé de la cellule, le procédé comprenant les étapes successives suivantes :
a) réception par le premier circuit de commande d'une consigne ;
b) transmission, par le premier circuit de commande aux deuxièmes circuits de commande, de premières commandes de connexion ou de déconnexion d'au moins l'un des accumulateurs électriques des modules pour suivre ladite consigne ; et
c) transmission, par le premier circuit de commande aux deuxièmes circuits de commande, de deuxièmes commandes de connexion de l'un des accumulateurs électriques et de déconnexion d'un autre accumulateur électrique parmi les accumulateurs électriques.

Selon un mode de réalisation, la consigne est choisie dans le groupe comprenant une consigne de fourniture d'une tension entre les première et deuxième bornes, une consigne de fourniture d'un courant à la première borne ou une consigne de nombre d'accumulateurs électriques.

Selon un mode de réalisation, le procédé comprend la détermination par le premier circuit de commande, pour au moins un premier élément parmi les éléments de l'une des listes chaînées, d'une nouvelle valeur d'un deuxième pointeur désignant un deuxième élément de la liste chaînée ou un troisième élément d'une autre liste chaînée. L'étape c) comprend les étapes successives suivantes :
d) déterminer si les premier et deuxième pointeurs dudit élément sont différents ; et
e) dans le cas où les premier et deuxième pointeurs sont différents, remplacer le premier pointeur par le deuxième pointeur et transmettre, par le premier circuit de commande aux deuxièmes circuits de commande, des deuxièmes commandes de connexion ou de déconnexion de l'accumulateur électrique correspondant à l'identifiant du premier élément.

Selon un mode de réalisation, l'étape e) comprend, dans le cas de la connexion de l'accumulateur électrique correspondant à l'identifiant du premier élément, la transmission de deuxièmes commandes de déconnexion de l'accumulateur électrique correspondant à l'identifiant d'un cinquième élément et dans le cas de la déconnexion de l'accumulateur électrique correspondant à l'identifiant du premier élément, la transmission de deuxièmes commandes de connexion de l'accumulateur électrique correspondant à l'identifiant d'un cinquième élément.

Selon un mode de réalisation, le procédé comprend la détermination par le premier circuit de commande d'une liste chaînée comprenant les éléments pour chacun desquels une nouvelle valeur du deuxième pointeur a été déterminée.

Selon un mode de réalisation, les étapes a), b) et c) sont répétées de façon cyclique, les étapes a) et b) n'étant pas présentes au moins pour un cycle lorsque la consigne ne varie pas audit cycle.

Selon un mode de réalisation, tous les éléments de l'une des listes chaînées comprennent des identifiants d'accumulateurs électriques qui sont connectés.

Selon un mode de réalisation, tous les éléments de l'une des listes chaînées comprennent des identifiants d'accumulateurs électriques qui sont non connectés et susceptibles d'être connectés.

Selon un mode de réalisation, tous les éléments de l'une des listes chaînées comprennent des identifiants d'accumulateurs électriques qui sont non connectés et mis en quarantaine.

Selon un mode de réalisation, le procédé comprend une première liste chaînée parmi les listes chaînées associée à une opération de charge de la batterie et une deuxième liste chaînée parmi les listes chaînées associée à une opération de décharge de la batterie et l'utilisation, aux étapes b) et c), par le premier circuit de commande de la première liste chaînée lorsque la batterie est en charge et de la deuxième liste chaînée lorsque la batterie est en décharge.

Selon un mode de réalisation, le procédé comprend une étape d'allocation statique d'une partie de la mémoire par le premier circuit de commande dans laquelle sont stockées les listes chaînées.

Un mode de réalisation prévoit également une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques, correspondant chacune à un élément de stockage de charges électriques, et des interrupteurs reliant les accumulateurs électriques entre eux et aux troisième et quatrième bornes du module et un deuxième circuit de commande des interrupteurs, la batterie comprenant en outre au moins un premier bus de transmission de données reliant le premier circuit de commande à chaque deuxième circuit de commande, le premier circuit de commande comprenant une mémoire dans laquelle sont stockées des listes chaînées, chaque liste chaînée comprenant des éléments comprenant chacun un identifiant de l'un des accumulateurs électriques et au moins un premier pointeur désignant un autre élément de la liste chaînée, chaque liste chaînée comprenant un classement des identifiants de la liste chaînée selon au moins un critère choisi dans le groupe comprenant la température de la cellule électrique, le taux de charge de la cellule électrique, la tension aux bornes de la cellule électrique, l'impédance interne de la cellule électrique, et l'état de santé de la cellule, le premier circuit de commande étant adapté à :
a) recevoir une consigne ;
b) transmettre aux deuxièmes circuits de commande des premières commandes de connexion ou de déconnexion d'au moins l'un des accumulateurs électriques des modules pour suivre ladite consigne ; et
c) transmettre aux deuxièmes circuits de commande des deuxièmes commandes de connexion de l'un des accumulateurs électriques et de déconnexion d'un autre accumulateur électrique parmi les accumulateurs électriques.

Selon un mode de réalisation, la batterie comprend un deuxième bus de transmission de données reliant le premier circuit de commande à chaque deuxième circuit de commande, le premier circuit de commande étant adapté à transmettre des premières données aux deuxièmes circuits de commande par le premier bus à un premier débit et étant adapté à transmettre des deuxièmes données aux deuxièmes circuits de commande par le deuxième bus à un deuxième débit inférieur au premier débit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente, de façon partielle et schématique, un exemple d'une batterie d'accumulateurs ;
la figure 2 représente, de façon partielle et schématique, un mode de réalisation d'un module de la batterie de la figure 1 ;
la figure 3 représente de façon schématique un élément 20 d'une liste chaînée utilisée lors du fonctionnement de la batterie représentée en figure 1 ;
la figure 4 représente, de façon partielle et schématique, un exemple de l'une des listes chaînées utilisées lors du fonctionnement de la batterie représentée en figure 1 ;
la figure 5 est un schéma par blocs illustrant un procédé de connexion/déconnexion des cellules de la batterie représentée en figure 1 ; et
la figure 6 représente, de façon partielle et schématique, un autre mode de réalisation d'une batterie d'accumulateurs.

### Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les fonctions classiques réalisées par un circuit de commande maître d'une batterie d'accumulateurs telles que l'équilibrage des cellules sont bien connues de l'homme du métier et ne sont pas décrites plus en détail par la suite. Dans la suite de la description, les expressions "sensiblement", "environ", "approximativement" et "de l'ordre de" signifient "à 10 % près", de préférence à 5 % près.

Le circuit de commande maître BMS peut correspondre à un circuit dédié et/ou peut comprendre un processeur, par exemple un microprocesseur ou un microcontrôleur, adapté à exécuter des instructions d'un programme d'ordinateur stocké dans une mémoire. Le circuit de commande maître BMS comprend notamment une mémoire MEM de stockage de données.

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

La figure 2 représente un mode de réalisation du module Eᵢ, où i varie de 1 à N.

Selon le présent mode de réalisation, le module Eᵢ est adapté à fournir une tension Uᵢ entre la borne positive B+ et la borne négative B-. Le module Eᵢ comprend des cellules C₁ à C_{M} où M est un nombre entier compris entre 2 et 10, de préférence entre 2 et 5, quatre cellules C₁, C₂, C₃ et C₄ étant représentées à titre d'exemple en figure 2. Les cellules C₁ à C_{M} sont reliées entre elles et aux bornes B+ et B- par des interrupteurs. Dans le présent mode de réalisation, pour chaque cellule Cₖ, k étant un nombre entier variant de 1 à M, le module Eᵢ comprend un premier interrupteur SW_{1,k} en série avec la cellule Cₖ et un deuxième interrupteur SW_{2,k} en parallèle de l'ensemble comprenant la cellule Cₖ et l'interrupteur SW_{1,k}. Les M ensembles comprenant la cellule Cₖ et le premier interrupteur SW_{1,k} sont disposés en série entre un noeud A et un noeud B. La commande des interrupteurs SW_{1,k} et SW_{2,k}, k variant de 1 à M, permet de mettre en série entre les noeuds A et B, 1 à M cellules parmi les M cellules C₁ à C_{M}. Dans le présent mode de réalisation, le module Eᵢ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur SW₃ reliant le noeud A à la borne B+, un interrupteur SW₄ reliant le noeud A à la borne B-, un interrupteur SW₅ reliant le noeud B à la borne B+ et un interrupteur SW₆ reliant le noeud B à la borne B-. A titre d'exemple chaque interrupteur SW_{1,k} et SW_{2,k}, k variant de 1 à M, SW₃, SW₄, SW₅ et SW₆ peut correspondre à transistor à effet de champ à grille isolée, également appelé transistor MOS, notamment un transistor MOS de puissance, par exemple un transistor MOS à canal N.

Chaque module Eᵢ comprend, en outre, le circuit de commande esclave 10 (µC) adapté à échanger des données émises par le circuit de commande maître BMS sur le bus de transmission de données BUS. Le circuit de commande esclave 10 peut correspondre à un circuit dédié ou peut comprendre un processeur, par exemple un microprocesseur ou un microcontrôleur, adapté à exécuter des instructions d'un programme d'ordinateur stocké dans une mémoire.

Chaque module Eᵢ comprend, en outre, un circuit de pilotage 12 (Inverter bridge driver) relié aux interrupteurs SW₃, SW₄, SW₅ et SW₆ du pont inverseur et un circuit de pilotage 14 (Transistors driver) relié aux interrupteurs SW_{1,k} et SW_{2,k}, k variant de 1 à M. Chaque circuit de pilotage 12, 14 est adapté à convertir les signaux de commande fournis par le circuit de commande esclave 10 en signaux adaptés à la commande des interrupteurs.

Chaque module Eᵢ comprend, en outre, des capteurs 16 (U, I, T° sensor) reliés au circuit de commande esclave 10. Le module Eᵢ peut comprendre, pour chaque cellule Cₖ, un capteur de température adapté à mesurer la température de la cellule Cₖ. Le module Eᵢ peut en outre comprendre, pour chaque cellule Cₖ, un capteur de tension adapté à mesurer la tension aux bornes de la cellule Cₖ. Le module Eᵢ peut en outre comprendre un capteur de courant adapté à mesurer le courant circulant au noeud A ou au noeud B. Le circuit de commande esclave 10 de chaque module Eᵢ est adapté à transmettre des troisièmes données au circuit de commande maître BMS sur le bus de transmission de données BUS représentatives des mesures réalisées par les capteurs 16 du module Eᵢ. Le nombre et le type de capteurs dépend notamment de l'agencement des cellules du module Eᵢ. Dans l'agencement de cellules représenté en figure 2, un seul capteur du courant circulant au noeud A ou au noeud B peut être prévu.

Dans le mode de réalisation de module Eᵢ de batterie illustré en figure 2, un ordre de connexion de la cellule Cₖ du module Eᵢ signifie que la cellule Cₖ doit être connectée en série entre les noeuds A et B du module Eᵢ, ce qui est obtenu en fermant l'interrupteur SW_{1,k} et en ouvrant l'interrupteur SW_{2,k}, et un ordre de déconnexion de la cellule Cₖ du module Eᵢ signifie que la cellule Cₖ ne doit pas être connectée en série entre les noeuds A et B du module Eᵢ, ce qui est obtenu en ouvrant l'interrupteur SW_{1,k} et en fermant l'interrupteur SW_{2,k}. Toutefois, pour un agencement différent des cellules Cₖ du module Eᵢ dans lequel les cellules Cₖ peuvent être agencées en série et/ou en parallèle entre elles entre les noeuds A et B, un ordre de connexion d'une cellule Cₖ précise en outre dans quelle configuration, série ou parallèle, la cellule Cₖ se trouve par rapport aux autres cellules du module Eᵢ.

Selon un mode de réalisation, une table de priorités est stockée dans la mémoire MEM du circuit de commande maître BMS par exemple sous la forme d'un tableau, chaque ligne du tableau correspondant par exemple à une ligne de la mémoire MEM. A titre d'exemple, pour une batterie comprenant N cellules, on attribue à chaque cellule un identifiant, par exemple un numéro qui varie de 1 à N. Pour une batterie 5 comprenant N cellules, la table de priorités comprend N lignes, chaque ligne j, j étant un nombre entier variant de 1 à N, étant associée à la cellule de numéro j. Il est notamment stocké dans la table de priorités pour chaque cellule le niveau de priorité de la cellule. A titre d'exemple, pour une batterie comprenant N cellules, les niveaux de priorité des cellules vont de 1 à N, le niveau de priorité "1" étant le plus important et le niveau de priorité "N" étant le moins important. Le circuit de commande maître BMS peut changer les niveaux de priorité des cellules de la table de priorités, notamment à partir des données transmises par les modules Eᵢ, i variant de 1 à N, issues des mesures des capteurs des modules Eᵢ. On appelle mise à jour de la table de priorités une modification des niveaux de priorité d'au moins certaines cellules par le circuit de commande maître BMS.

Le circuit de commande maître BMS associe, à chaque cellule ayant un niveau de priorité donné, un pointeur, appelé pointeur de priorité suivant par la suite, qui désigne la cellule de la table de priorités qui a le niveau de priorité juste inférieur au niveau de priorité donné et un pointeur, appelé pointeur de priorité précédent par la suite, qui désigne la cellule dans la table de priorités qui a le niveau de priorité juste supérieur au niveau de priorité donné.

Le pointeur de priorité précédent associé à la cellule ayant le niveau de priorité le plus élevé dans la table de priorités ne désigne pas d'autre cellule et peut comprendre une valeur de référence appelée Null. Le pointeur de priorité suivant associé à la cellule ayant le niveau de priorité le plus faible dans la table de priorités ne désigne pas d'autre cellule et peut comprendre une valeur de référence appelée Null.

Une opération de mise à jour comprend la détermination de nouveaux niveaux de priorité dans la table de priorités pour les cellules. Le circuit de commande maître BMS associe, en outre, à chaque cellule, un pointeur, appelé futur pointeur de priorité précédent par la suite, qui désigne la cellule dans la table de priorités qui a le niveau de priorité juste supérieur au nouveau niveau de priorité de la cellule dans la mise à jour de la table de priorités et un pointeur, appelé futur pointeur de priorité suivant par la suite, qui désigne la cellule dans la table de priorités qui a le niveau de priorité juste inférieur au nouveau niveau de priorité de la cellule dans la mise à jour de la table de priorités. Selon un mode de réalisation, les pointeurs de priorité suivant et précédent et les futurs pointeurs de priorité suivant et précédent peuvent être stockés dans la table de priorités.

Selon un mode de réalisation, le circuit de commande maître BMS peut transmettre des premières commandes correspondant à des ordres de connexion/déconnexion des cellules aux circuits de commande esclaves pour suivre la consigne C et peut en outre transmettre des deuxièmes commandes correspondant à des ordres de connexion/déconnexion des cellules aux circuits de commande esclaves pour tenir compte d'une une mise à jour de la table de priorités.

Selon un mode de réalisation, le circuit de commande maître BMS utilise des listes chaînées pour déterminer les ordres de connexion/déconnexion des cellules à réaliser. Une liste chaînée désigne en informatique une structure de données représentant une collection ordonnée et de taille arbitraire d'éléments de même type, dont la représentation en mémoire de l'ordinateur est une succession d'éléments faits d'un contenu et d'au moins un pointeur vers un autre élément. De façon imagée, l'ensemble des éléments ressemble à une chaîne dont les maillons seraient les éléments. Toutes les données relatives à chaque liste chaînée peuvent être stockées dans la mémoire MEM du circuit de commande maître BMS.

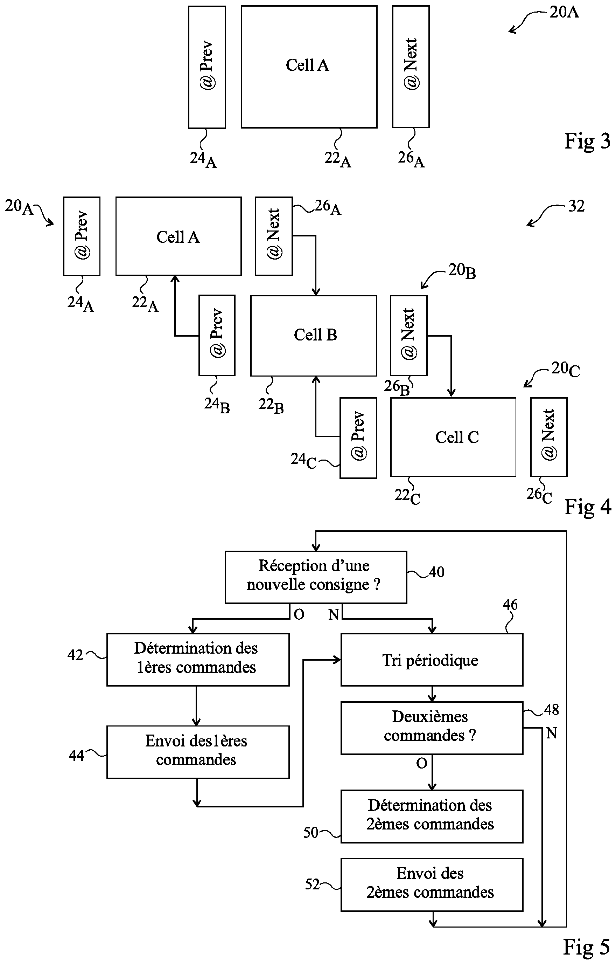

La figure 3 représente de façon schématique un élément 20_{A} de la liste chaînée. Chaque élément 20_{A} comprend :
un identifiant 22_{A} (Cell A) de l'une des cellules de la batterie 5, par exemple le même que celui utilisé dans la table de priorités ;
un pointeur 24_{A} (@ Prev) qui désigne un élément de la liste chaînée correspondant à une cellule ayant un niveau de priorité plus élevée que celle correspondant à l'élément 20_{A} dans la version de la table de priorités avant mise à jour, et qui est appelé pointeur précédent 24_{A} dans la suite de la description ; et
un pointeur 26_{A} (@ Next) qui désigne un élément de la liste chaînée correspondant à une cellule ayant un niveau de priorité moins élevée que celle correspondant à l'élément 20_{A} dans la version de la table de priorités avant mise à jour, et qui est appelé pointeur suivant 26_{A} dans la suite de la description.

Dans la suite de la description, on parle indifféremment d'une cellule ou de l'élément associé d'une liste chaînée.

Selon un mode de réalisation, chaque liste chaînée comprend seulement une partie des cellules de la batterie 5. Deux éléments de deux listes chaînées différentes associés à la même cellule de la batterie ont le même identifiant 22_{A}. Par contre, les valeurs du pointeur précédent 24_{A} et du pointeur suivant 26_{A} de deux éléments de deux listes chaînées différentes associés à la même cellule de la batterie peuvent être différents. De même, le pointeur précédent 24_{A} d'une cellule d'une liste chaînée peut être différent du pointeur de priorité précédent utilisé pour cette cellule dans la table de priorités et le pointeur suivant 26_{A} d'une cellule d'une liste chaînée peut être différent du pointeur de priorité suivant utilisé pour cette cellule dans la table de priorités.

La figure 4 représente, de façon partielle et schématique, un exemple d'une liste chaînée 32 pouvant être utilisée par le circuit de commande maître BMS comprenant, à titre d'exemple, trois éléments 20_{A}, 20_{B} et 20_{C}. Le pointeur suivant 26_{A} de l'élément 20_{A} désigne l'élément 26_{B} de la liste chaînée et le pointeur précédent 24_{B} de l'élément 26_{B} désigne l'élément 20_{A} de la liste chaînée. Le pointeur suivant 26_{B} de l'élément 20_{B} désigne l'élément 26_{C} de la liste chaînée et le pointeur précédent 24_{C} de l'élément 26_{C} désigne l'élément 20_{B} de la liste chaînée. Cela signifie que, dans la version avant mise à jour de la table de priorités, le niveau de priorité de l'élément 20_{A} est plus important que le niveau de priorité de l'élément 20_{B} et que le niveau de priorité de l'élément 20_{B} est plus important que le niveau de priorité de l'élément 20_{C}.

La liste chaînée comprend deux éléments particuliers, les éléments 20_{A} et 20_{C} situés aux extrémités de la liste chaînée. Le pointeur précédent 26_{A} de l'élément 20_{A} de la liste chaînée ne désigne pas un élément de la liste chaînée et comprend une valeur de référence appelée Null. Le pointeur suivant 26_{C} de l'élément 20_{C} de la liste chaînée ne désigne pas un élément de la liste chaînée et comprend la valeur de référence Null.

Les éléments d'une liste chaînée sont agencés de façon ordonnée depuis le premier élément de la liste chaînée jusqu'au dernier élément de la liste chaînée. Dans l'exemple représenté en figure 4, le premier élément de la liste chaînée 32 peut correspondre à l'élément 20A ou à l'élément 20B selon la façon dont les éléments sont agencés dans la liste chaînée. Le rang d'un élément dans la liste chaîné correspond à la position de cet élément compté depuis le premier élément 20_{A} de la liste chaînée.

Le retrait d'un élément d'une liste chaînée va être illustré avec la liste chaînée 32 de la figure 4. A titre d'exemple, le retrait de l'élément 20_{B} est obtenu en modifiant le pointeur suivant 26_{A} de l'élément 20_{A} pour qu'il désigne l'élément 20_{C} et en modifiant le pointeur précédent 24_{C} de l'élément 20_{C} pour qu'il désigne l'élément 20_{A}. Le retrait de l'élément 20_{A} est obtenu en modifiant le pointeur précédent 24_{B} de l'élément 20_{B} pour qu'il désigne la valeur de référence Null. Le retrait de l'élément 20_{C} est obtenu en modifiant le pointeur suivant 26_{B} de l'élément 20_{B} pour qu'il désigne la valeur de référence Null.

L'ajout d'un nouvel élément au sein d'une liste chaînée est obtenu en modifiant les pointeurs adaptés des éléments entre lesquels le nouvel élément est inséré pour qu'ils désignent le nouvel élément et en modifiant les pointeurs suivant et précédent du nouvel élément pour qu'ils désignent les éléments entre lesquels le nouvel élément est inséré. A titre d'exemple, l'ajout d'un nouvel élément, non représenté, entre les éléments 20_{A} et 20_{B} de la liste chaînée 32 est obtenu en modifiant le pointeur suivant 26_{A} de l'élément 20_{A} pour qu'il désigne l'élément, en modifiant le pointeur précédent 24_{B} de l'élément 20_{B} pour qu'il désigne le nouvel élément, en modifiant le pointeur précédent du nouvel élément pour qu'il désigne l'élément 20_{A} et en modifiant le pointeur suivant du nouvel élément pour qu'il désigne l'élément 20_{B}.

L'ajout d'un nouvel élément à une extrémité d'une liste chaînée va être illustré par l'ajout d'un nouvel élément à l'extrémité de la liste chaînée 32 correspondant à l'élément 20_{A}. Cet ajout est obtenu en modifiant le pointeur précédent de l'élément 20_{A} qui était initialement à l'extrémité de la liste chaînée 32 pour qu'il désigne le nouvel élément, en modifiant le pointeur suivant du nouvel élément pour qu'il désigne l'élément 20_{A} qui était initialement à l'extrémité de la liste chaînée 32 et en modifiant le pointeur suivant du nouvel élément pour qu'il désigne la valeur de référence Null.

Le circuit de commande maître BMS peut utiliser plusieurs listes chaînées. Selon un mode de réalisation, le circuit de commande maître BMS utilise une liste chaînée dont les éléments correspondent aux cellules de la batterie 5 utilisables qui sont connectées ou déconnectées. Une telle liste chaînée est appelée liste de cellules valides par la suite. Les éléments de la liste de cellules valides peuvent être agencés avec le premier élément correspondant à la cellule ayant le niveau de priorité le plus important dans la version avant mise à jour de la table de priorités. Les cellules connectées sont alors toutes situées dans la première partie de la liste de cellules valides depuis la première position de la liste de cellules valides et les cellules déconnectées sont toutes situées dans la deuxième partie de la liste de cellules valides jusqu'à la dernière position de la liste de cellules valides. Le circuit de commande maître BMS peut utiliser un pointeur de position qui est maintenu à jour pour marquer la position dans la liste chaînée du dernier élément connecté de niveau de priorité le plus faible. A titre de variante, ce pointeur peut désigner le premier élément déconnecté ayant le niveau de priorité le plus élevé.

Selon un autre mode de réalisation, au lieu de la liste de cellules valides, le circuit de commande maître BMS utilise deux listes chaînées, une liste chaînée dont les éléments correspondent aux cellules de la batterie 5 qui sont connectées, et appelée liste de cellules connectées par la suite, et une liste chaînée dont les éléments correspondent aux cellules de la batterie 5 qui ne sont pas connectées mais qui sont susceptibles d'être connectées, et appelée liste de cellules déconnectées par la suite. Les éléments de la liste de cellules déconnectées peuvent être agencés avec le premier élément correspondant à la cellule ayant le niveau de priorité le plus important dans la version avant mise à jour de la table de priorités parmi les cellules déconnectées. Les éléments de la liste de cellules connectées peuvent être agencés avec le premier élément correspondant à la cellule ayant le niveau de priorité le moins important dans la version avant mise à jour de la table de priorités parmi les cellules connectées.

Selon un mode de réalisation, le circuit de commande maître BMS utilise en outre une liste chaînée dont les éléments correspondent à des cellules de la batterie 5 qui ne sont pas connectées et qui ne peuvent pas être sélectionnées. De tels éléments et les cellules correspondantes sont dits en quarantaine par la suite et cette liste chaînée est appelée liste de quarantaine par la suite. Le circuit de commande maître BMS est adapté à déterminer qu'une cellule de la batterie doit être mise en quarantaine et l'élément correspondant doit être déplacé dans la liste de quarantaine notamment à partir des signaux fournis par les capteurs des modules Eᵢ, i variant de 1 à N.

Selon un autre mode de réalisation, le circuit de commande maître BMS utilise, au lieu d'une liste de cellules en quarantaine, deux listes chaînées ou plus de deux listes chaînées d'éléments mis en quarantaine selon les conditions qui ont conduit à écarter les cellules correspondantes. Une liste chaînée peut comprendre des éléments mis en quarantaine de façon temporaire. Une telle liste chaînée est appelée liste de quarantaine temporaire par la suite. Une autre liste chaînée peut comprendre des éléments mis en quarantaine de façon définitive et dont les cellules correspondantes doivent être remplacées. Une telle liste chaînée est appelée liste de quarantaine définitive par la suite. Dans les listes de quarantaine décrites précédemment, les éléments peuvent être agencés avec le premier élément correspondant à la cellule ayant le niveau de priorité le plus important dans la version avant mise à jour de la table de priorités parmi les cellules de la liste chaînée. A titre de variante, les éléments peuvent être agencés dans la liste de quarantaine par ordre d'arrivée dans la liste chaînée.

Selon un mode de réalisation, il est utilisé la même table de priorités à la fois pour une opération de charge et pour une opération de décharge. Un tel mode de réalisation peut être mis en oeuvre lorsque l'on ne prend en compte que les états de charge des cellules pour la détermination des niveaux de priorité des cellules de la batterie. En effet, dans ce cas les niveaux de priorité pour une opération de charge peuvent être les symétriques des niveaux de priorité pour une opération de décharge, c'est-à-dire que l'ordre des niveaux de priorité des cellules, du plus prioritaire au moins prioritaire, pour une opération de décharge de la batterie 5 est l'inverse de l'ordre des niveaux de priorité des cellules, du plus prioritaire au moins prioritaire, pour une opération de charge. Selon un mode de réalisation, lors du passage d'une opération de charge à une opération de décharge et inversement, le circuit de commande maître BMS inverse le classement des niveaux des priorités dans la table de priorités.

Selon un autre mode de réalisation, le circuit de commande maître BMS peut utiliser deux tables de priorités, une première table de priorités qui est utilisée lors d'une opération de charge, appelée table de priorités de charge, et une deuxième table de priorités qui est utilisée lors d'une opération de décharge, appelée table de priorités de décharge. Un tel mode de réalisation peut être avantageux si on prend en compte des critères supplémentaires, en plus de l'état de charge, pour la détermination des niveaux de priorité des cellules de la batterie, par exemple la température de la cellule, l'état de santé de la cellule ou l'impédance interne de la cellule. En effet, il peut alors être souhaitable que les niveaux de priorité des cellules pour une opération de charge ne soient pas symétriques des niveaux de priorité des cellules pour une opération de décharge. De plus, le circuit de commande maître BMS peut utiliser des listes chaînées différentes selon que la batterie 5 est en charge ou en décharge.

Ainsi, le circuit de commande maître BMS peut comprendre une liste de cellules valides pour une opération de charge (ou une liste de cellules connectées pour une opération de charge et une liste de cellules déconnectées pour une opération de charge), une liste de cellules valides pour une opération de décharge (ou une liste de cellules connectées pour une opération de décharge et une liste de cellules déconnectées pour une opération de décharge), une liste de quarantaine temporaire pour une opération de charge et une liste de quarantaine temporaire pour une opération de décharge.

Selon un autre mode de réalisation, au lieu d'une liste de cellules en quarantaine temporaire pour une opération de charge et une liste de cellules en quarantaine temporaire pour une opération de décharge, le circuit de commande maître BMS peut utiliser plus de deux listes chaînées d'éléments mis en quarantaine temporaire selon les conditions qui ont conduit à écarter les cellules correspondantes. Une liste chaînée peut comprendre des éléments mis en quarantaine de façon temporaire lorsqu'au moins l'un des paramètres de fonctionnement des cellules correspondantes, par exemple la température de la cellule, le taux de charge de la cellule, la tension aux bornes de la cellule, etc., est en dehors d'une plage de fonctionnement normale. Une telle liste chaînée est appelée liste de quarantaine temporaire pour cause de tension/température par la suite. Le circuit de commande maître BMS peut utiliser une liste de quarantaine temporaire pour cause de tension/température pour les opérations de charge et une liste de quarantaine temporaire pour cause de tension/température pour les opérations de décharge.

Selon un mode de réalisation, le nombre d'opérations de connexion/déconnexion que peut réaliser le circuit de commande esclave 12 d'un module Eᵢ, i variant de 1 à N, par unité de temps peut être limité de par la structure des circuits d'alimentation des composants internes du module Eᵢ. Une autre liste chaînée peut comprendre des éléments mis en quarantaine de façon temporaire parce que les modules contenant les cellules correspondantes ont dépassé le seuil autorisé d'opérations de connexion/déconnexion par unité de temps. Une telle liste chaînée est appelée liste de quarantaine temporaire pour cause d'alimentation par la suite. Pour la liste de quarantaine pour cause d'alimentation et la liste de quarantaine définitive, il peut ne pas être utile de prévoir des listes chaînées différentes pour les opérations de charge et de décharge dans la mesure où les critères qui entraînent le déplacement d'un élément dans l'une de ces listes peuvent être les mêmes pour une opération de charge ou de décharge.

Selon un mode de réalisation, pour une opération de charge ou de décharge, à chaque cellule de la batterie correspond un seul élément dans l'une des listes de sélection utilisées pour cette opération de charge ou de décharge. On parle alors indifféremment de la cellule ou de l'élément correspondant dans la suite de la description. Plus précisément, dans le cas où le circuit de commande maître BMS utilise, sans distinguer les opérations de charge et les opérations de décharge, une liste de cellules connectées, une liste de cellules déconnectées et au moins une liste de cellules en quarantaine, chaque cellule se trouve soit dans la liste de cellules connectées, soit dans la liste de cellules déconnectées, soit dans l'une des listes de cellules en quarantaine.

Selon un mode de réalisation, dans le cas où le circuit de commande maître BMS utilise une liste de cellules connectées pour une opération de charge, une liste de cellules connectées pour une opération de décharge, une liste de cellules déconnectées pour une opération de charge, une liste de cellules déconnectées pour une opération de décharge, une liste de quarantaine temporaire pour cause de tension/température pour une opération de charge et une liste de quarantaine temporaire pour cause de tension/température pour une opération de décharge et au moins une autre liste de quarantaine commune pour les opérations de charge et de décharge, chaque cellule est dans l'une des listes chaînées suivantes :
la liste de cellules connectées pour une opération de charge, la liste de cellules déconnectées pour une opération de charge, la liste de quarantaine temporaire pour cause de tension/température pour une opération de charge ou une autre liste de quarantaine commune aux opérations de charge et de décharge ;
et dans l'une des listes suivantes :
   liste de cellules connectées pour une opération de décharge, liste de cellules déconnectées pour une opération de décharge, liste de quarantaine temporaire pour cause de tension/température pour une opération de décharge ou autre liste de quarantaine commune aux opérations de charge et de décharge.

Toutefois, de façon avantageuse, certaines combinaisons peuvent être exclues. A titre d'exemple, il peut être prévu qu'une cellule ne puisse pas être à la fois dans la liste de cellules connectées pour une opération de charge et dans la liste de quarantaine temporaire pour cause de tension/température pour une opération de décharge. En effet, sans cette exclusion, lors du passage d'une opération de charge à une opération de décharge, l'élément de la liste de cellules connectées de charge, qui correspond donc à un accumulateur qui est connecté électriquement, se trouve dans la liste de quarantaine temporaire pour cause de tension/température pour une opération de décharge, tout en correspondant toujours à un accumulateur qui est connecté électriquement. Il serait alors nécessaire à la transition d'une opération de charge vers une opération de décharge (ou d'une opération de décharge vers une opération de charge) d'appliquer un traitement supplémentaire à la liste de quarantaine temporaire pour cause de tension/température pour une opération de décharge (ou de charge) pour déconnecter les accumulateurs toujours connectés électriquement, ce qui implique un temps de traitement supplémentaire. Le fait de prévoir des exclusions permet donc de faciliter les transitions entre les opérations de charge et de décharge.

Dans la suite de la description, les listes chaînées décrites précédemment et utilisées par le circuit de commande maître BMS pour la détermination des premières et deuxièmes commandes sont appelées listes de sélection.

Dans le cas où il n'y a pas de distinction entre les opérations de charge et de décharge, le circuit de commande maître BMS associe à chaque cellule de la batterie, le pointeur précédent de cet élément dans la liste de sélection à laquelle appartient l'élément, le pointeur suivant de cet élément dans la liste de sélection à laquelle appartient l'élément, et une donnée d'appartenance permettant de déterminer directement ou indirectement à quelle liste de sélection appartient la cellule.

Dans le cas où une distinction est réalisée entre les listes de sélection associées à une opération de charge et les listes de sélection associées à une opération de décharge, les données précédentes sont associées à chaque cellule à la fois pour la liste de sélection associée à une opération de charge et la liste de sélection associée à une opération de décharge. Lorsque la cellule appartient à deux listes de sélection, l'une associée à une opération de charge et l'autre associée à une opération de décharge, le pointeur précédent, le pointeur suivant et la donnée d'appartenance indiqués à la phrase précédente, sont associées à la cellule à la fois pour la liste de sélection associée à une opération de charge et la liste de sélection associée à une opération de décharge. Un avantage du mode de réalisation décrit précédemment est que la gestion des listes chaînées peut mettre en oeuvre une allocation statique de mémoire puisqu'un nombre maximal connu de données est stocké pour chaque accumulateur de la batterie.

Dans la suite de la description, sauf indication contraire, on considère, pour plus de simplicité, qu'un élément appartient à une seule liste de sélection. Toutefois, dans le cas où l'élément appartient à deux listes de sélection, l'une associée à une opération de charge et l'autre associée à une opération de décharge, les étapes décrites ci-après sont à réaliser pour chaque liste de sélection.

La mise à jour de la table de priorités comprend notamment la détermination par le circuit de commande maître BMS, pour chaque cellule, d'une nouvelle valeur du niveau de priorité de la cellule. La mise à jour de la table de priorités comprend, en outre, la détermination des nouvelles valeurs pour les futurs pointeurs précédents et suivants pour tenir compte des changements de niveaux de priorité. Pour effectuer une mise à jour de la table de priorités, le circuit de commande maître BMS peut utiliser une copie de la table de priorités, appelée table de priorités temporaire, sur laquelle sont appliqués des algorithmes pour déterminer les nouvelles valeurs des niveaux de priorités et des futurs pointeurs. Lorsque toutes les nouvelles valeurs de la table de priorités temporaire sont déterminées, le circuit de commande maître BMS arrête l'utilisation de la table de priorités et utilise la table de priorités temporaire. La table de priorités temporaire devient alors la table de priorités mise à jour et la table de priorités utilisée jusqu'alors par le circuit de commande maître BMS pour la détermination des premières et deuxièmes commandes peut être utilisée comme prochaine table de priorité temporaire. La mise à jour de la table de priorités peut être réalisée en tache de fond par le circuit de commande maître BMS, lorsque les ressources du circuit de commande maître BMS ne sont pas utilisées pour mettre en oeuvre le procédé de commande des cellules qui va être décrit. Dans le cas où il est utilisé une table de priorités de charge et une table de priorités de décharge, le circuit de commande maître BMS met à jour séparément ces deux tables de priorités. Selon un mode de réalisation, lorsque le circuit de commande maître BMS met à jour la table de priorités de charge, il met également à jour la table de priorités de décharge et inversement.

Selon un mode de réalisation, en plus des listes de sélection, le circuit de commande maître BMS utilise une liste chaînée supplémentaire contenant les éléments qui sont susceptibles de ne pas être correctement placés dans les listes de sélection. Cette liste chaînée est appelée liste de tri par la suite. Un élément présent dans la liste de tri est donc toujours présent dans au moins l'une des listes de sélection.

Lorsqu'une seule table de priorités est utilisée, des éléments peuvent ne pas être placés correctement dans les listes de sélection suite à un changement des niveaux de priorité résultant d'une mise à jour de la table de priorités ou lors d'un passage entre une opération de charge et de décharge.

Des éléments peuvent ne pas être placés correctement dans les listes de sélection pour plusieurs raisons quand une table de priorités de charge et une table de priorités de décharge sont utilisées :
- des éléments peuvent ne pas être placés correctement dans les listes de sélection associées à une opération de charge suite à un changement des niveaux de priorité résultant d'une mise à jour de la table de priorités de charge ;
- des éléments peuvent ne pas être placés correctement dans les listes de sélection associées à une opération de décharge suite à un changement des niveaux de priorité résultant d'une mise à jour de la table de priorités de décharge ;
- des éléments peuvent ne pas être placés correctement dans les listes de sélection associées à une opération de charge suite à un changement des niveaux de priorité résultant d'une mise à jour de la table de priorités de décharge alors que la batterie est en décharge et qui entraînerait des incohérences lors du passage de l'opération de décharge à une opération de charge ; et
- des éléments peuvent ne pas être placés correctement dans les listes de sélection associées à une opération de décharge suite à un changement des niveaux de priorité résultant d'une mise à jour de la table de priorités de charge alors que la batterie est en charge et qui entraînerait des incohérences lors du passage de l'opération de charge à une opération de décharge.

Selon un mode de réalisation, le circuit de commande maître BMS peut utiliser une seule liste de tri comprenant tous les éléments susceptibles de ne pas être correctement placés pour une opération de charge et de décharge. Selon un mode de réalisation, lors de la mise à jour de la table de priorités de charge ou de décharge, tous les éléments de la table de priorités peuvent être placés par défaut dans la liste de tri. Ceci permet d'être sûr de traiter les incohérences de placement vis-à-vis des nouveaux jeux de priorités et vis-à-vis des passages entre les opérations de charge et de décharge.

Selon un autre mode de réalisation, le circuit de commande maître BMS peut ajouter un élément à la liste de tri lorsque les futurs pointeurs suivant et précédent ont été modifiés par la mise à jour de la table de priorités. Dans le cas où il est utilisé une table de priorités de charge et une table de priorités en décharge, le circuit de commande maître BMS peut utiliser une liste de tri pour une opération de charge, appelée liste de tri de charge, et une liste de tri pour une opération de décharge, appelée liste de tri en décharge. A titre de variante, le circuit de commande maître BMS peut utiliser une liste de tri, appelée liste de tri commune, qui comprend les éléments qui sont à trier de la même façon lors d'une mise à jour de la table de priorités de charge et de la table de priorités de décharge ou lors d'un basculement d'une liste de sélection de charge à une liste de sélection de décharge ou inversement lors d'un changement d'un passage de la batterie entre charge et décharge, une liste de tri, appelée liste de tri spécifique de charge, qui comprend les éléments qui sont à trier lors d'une mise à jour d'au moins l'une des tables de priorité ou à retrier après une alternance avec le mode de fonctionnement en décharge, et une liste de tri, appelée liste de tri spécifique de décharge, qui comprend les éléments qui sont à trier lors d'une mise à jour d'au moins l'une des tables de priorité ou à retrier après une alternance avec le mode de fonctionnement en charge.

Le circuit de commande maître BMS peut mettre à jour la liste de tri ou les listes de tri à chaque mise à jour de la table de priorités de charge ou de décharge.

Comme cela est décrit par la suite, il est mis en oeuvre une opération de triage pour placer correctement les éléments qui figurent dans la liste de tri ou les listes de tri. Lorsqu'un élément est trié, cet élément peut être retiré de la liste de tri si les niveaux de priorité ne sont pas modifiés et s'il n'y a pas eu d'alternance entre une opération de charge et une opération de décharge. On obtient ainsi une convergence vers un état stable où tous les éléments sont triés tant que les niveaux de priorité et le mode de fonctionnement (en charge ou en décharge) ne changent pas.

La figure 5 est un schéma par blocs illustrant un procédé de commande de connexion/déconnexion des cellules pouvant être mis en oeuvre par la batterie 5 représentée en figure 1.

A l'étape 40, le circuit de commande maître BMS détermine si une nouvelle consigne C a été reçue. Si une nouvelle consigne C a été reçue, le procédé se poursuit à l'étape 42.

A l'étape 42, le circuit de commande BMS détermine des premières commandes pour suivre la nouvelle consigne C.

Selon un mode de réalisation dans lequel la liste de cellules valides décrite précédemment est utilisée, le circuit de commande maître BMS peut utiliser le pointeur de position décrit précédemment qui désigne le dernier élément connecté. Lorsque la nouvelle consigne C entraîne la connexion d'une cellule supplémentaire de la batterie 5, le circuit de commande maître BMS sélectionne l'élément de la liste de cellules valides qui suit le dernier élément connecté et détermine des premières commandes pour connecter la cellule correspondant à cet élément qui devient alors le dernier élément connecté. Cette opération est répétée autant de fois qu'il y a de cellules à connecter pour suivre la nouvelle consigne C. Lorsque la nouvelle consigne C entraîne la déconnexion d'une cellule de la batterie 5, le circuit de commande maître BMS sélectionne le dernier élément connecté et détermine des premières commandes pour déconnecter la cellule correspondant à cet élément, l'élément précédent de la liste de cellules valides devenant le dernier élément connecté. Cette opération est répétée autant de fois qu'il y a de cellules à déconnecter pour suivre la nouvelle consigne C.

Selon un mode de réalisation dans lequel les listes de cellules connectées et déconnectées décrites précédemment sont utilisées, lorsque la nouvelle consigne C entraîne la connexion d'une cellule supplémentaire de la batterie 5, le circuit de commande maître BMS sélectionne le premier élément de la liste de cellules déconnectées et détermine des premières commandes pour connecter la cellule de la batterie 5 correspondant à cet élément. Cette opération est répétée autant de fois qu'il y a de cellules à connecter pour suivre la nouvelle consigne C. Selon un mode de réalisation, lorsque la nouvelle consigne C entraîne la déconnexion d'une cellule supplémentaire de la batterie 5, le circuit de commande maître BMS sélectionne le premier élément de la liste connectée et détermine des premières commandes pour déconnecter la cellule de la batterie 5 correspondant à cet élément. Cette opération est répétée autant de fois qu'il y a de cellules à déconnecter pour suivre la nouvelle consigne C.

Dans les modes de réalisation décrits précédemment, l'opération de sélection peut être avantageusement réalisée de façon robuste puisqu'il est garanti que le premier élément de la liste déconnectée ou connectée est toujours disponible pour être sélectionné ou que l'élément désigné par un pointeur ou l'élément suivant l'élément désigné par un pointeur est toujours disponible pour être sélectionné. En outre, l'opération de sélection peut être réalisée dans une durée bornée puisqu'il n'y a pas d'étape de recherche d'éléments à connecter ou déconnecter, les éléments sélectionnés étant déterminés de façon automatique.

Selon un mode de réalisation, à l'étape de sélection, une opération de tri des listes de sélection n'est pas réalisée. Dans ce cas, lorsque la liste de cellules valides décrite précédemment est utilisée, lorsque le circuit de commande maître BMS sélectionne le dernier élément connecté de la liste de cellules valides pour déconnecter la cellule correspondante, il modifie seulement le pointeur de position qui désigne le dernier élément connecté. De même, lorsque le circuit de commande maître BMS sélectionne l'élément suivant le dernier élément connecté de la liste de cellules valides pour connecter la cellule correspondante, il modifie seulement le pointeur de position qui désigne dorénavant cet élément. Lorsque les listes de cellules connectées et déconnectées décrites précédemment sont utilisées, lorsque le circuit de commande maître BMS sélectionne le premier élément de la liste déconnectée, il le place en première position de la liste connectée et modifie les pointeurs des éléments concernés en conséquence et lorsque le circuit de commande maître BMS sélectionne le premier élément de la liste connectée, il le place en première position de la liste déconnectée et modifie les pointeurs des éléments concernés en conséquence.

Selon un mode de réalisation, dans le cas où une distinction est réalisée entre les listes de sélection associées à une opération de charge et les listes de sélection associées à une opération de décharge, que la batterie est en charge et qu'au moins une cellule utilisable est connectée ou déconnectée, le circuit de commande maître BMS modifie la liste de cellules valides pour une opération de charge (ou la liste de cellules connectées pour une opération de charge et la liste de cellules déconnectées pour une opération de charge) mais également la liste de cellules valides pour une opération de décharge (ou la liste de cellules connectées pour une opération de décharge et la liste de cellules déconnectées pour une opération de décharge) . De même, lorsque la batterie est en décharge et qu'au moins une cellule utilisable est connectée ou déconnectée, le circuit de commande maître modifie la liste de cellules valides pour une opération de décharge (ou la liste de cellules connectées pour une opération de décharge et la liste de cellules déconnectées pour une opération de décharge) mais également la liste de cellules valides pour une opération de charge (ou la liste de cellules connectées pour une opération de charge et la liste de cellules déconnectées pour une opération de charge). Toutefois, lorsque la batterie est en charge et qu'au moins une cellule est mise dans la liste de quarantaine temporaire pour cause de tension/température pour une opération de charge, le circuit de commande maître BMS peut ne pas mettre la cellule dans la liste de quarantaine temporaire pour cause de tension/température pour une opération de décharge. En effet, une cellule peut être mise dans la liste de quarantaine temporaire pour cause de tension/température pour une opération de charge parce que son état de charge dépasse un seuil alors qu'il est souhaitable que cette cellule reste immédiatement disponible lors d'un passage en décharge. De même, lorsque la batterie est en décharge et qu'au moins une cellule est mise dans la liste de quarantaine temporaire pour cause de tension/température pour une opération de décharge, le circuit de commande maître BMS peut ne pas mettre la cellule dans la liste de quarantaine temporaire pour cause de tension/température pour une opération de charge. En effet, une cellule peut être mise dans la liste de quarantaine temporaire pour cause de tension/température pour une opération de décharge parce que son état de charge passe en dessous un seuil alors qu'il est souhaitable que cette cellule reste immédiatement disponible lors d'un passage en charge.

Selon un mode de réalisation, à l'étape de sélection, une opération de tri des éléments sélectionnés des listes de sélection est en outre réalisée notamment pour tenir compte d'une éventuelle mise à jour de la table de priorités. Une contrainte est que l'opération de tri doit être compatible avec le résultat de l'exécution de l'étape de sélection sans opération de tri. Un exemple de contrainte de compatibilité est que si l'exécution de l'étape de sélection sans opération de tri entraîne la déconnexion de la dernière cellule connectée de la liste de cellules valides de charge (ou de décharge), l'opération de tri doit entraîner le déplacement de la dernière cellule connecté dans la partie de la liste de cellules valides de charge (ou de décharge) regroupant les cellules déconnectées. Un autre exemple de contrainte de compatibilité est que si l'exécution de l'étape de sélection sans opération de tri entraîne le retrait de l'élément sélectionné de la liste des cellules connectées de charge (ou de décharge) et l'insertion de l'élément sélectionné en tête de la liste des cellules déconnectées de charge (ou de décharge), l'opération de tri doit entraîner le déplacement de l'élément sélectionné de la liste des cellules connectées de charge (ou de décharge) vers la liste des cellules déconnectées de charge (ou de décharge) à une position autre que la première position. Selon un mode de réalisation, lorsque la batterie est en charge, l'opération de tri à l'étape de sélection est réalisée seulement dans les listes de sélection de charge et lorsque la batterie est en décharge, l'opération de tri à l'étape de sélection est réalisée seulement dans les listes de sélection de décharge. L'opération de tri peut être réalisée selon différents modes de réalisation correspondant à un tri plus ou moins partiel de l'élément sélectionné.

Selon un mode de réalisation, l'opération de tri correspond à un tri partiel de l'élément sélectionné qui consiste à déplacer l'élément sélectionné au plus près de l'élément désigné par le futur pointeur de priorité précédent ou par le futur pointeur de priorité suivant si cela est compatible avec le résultat de l'exécution de l'étape de sélection sans opération de tri. Dans le cas où la liste de cellules connectées et la liste de cellules déconnectées décrites précédemment sont utilisées, la contrainte d'un tel tri partiel est simplement que l'élément désigné par le futur pointeur de priorité précédent ou l'élément désigné par le futur pointeur de priorité suivant se trouve dans la liste de sélection dans laquelle doit être déplacé l'élément sélectionné. Ceci permet de façon avantageuse de borner la durée de l'exécution de l'opération de tri.

Selon un autre mode de réalisation, le circuit de commande maître BMS, pour l'élément sélectionné, compare le futur pointeur de priorité précédent avec le pointeur de priorité précédent et compare le futur pointeur de priorité suivant avec le pointeur de priorité suivant. Cette comparaison est indépendante de la liste de sélection à laquelle appartient l'élément sélectionné. Dans le cas où le futur pointeur de priorité précédent est égal au pointeur de priorité précédent et que le futur pointeur de priorité suivant est égal au pointeur de priorité suivant, cela signifie que le niveau de priorité de l'élément sélectionné n'a pas bougé et qu'il n'y a pas à réaliser d'opération de tri de l'élément sélectionné. Dans le cas où le futur pointeur de priorité précédent est différent du pointeur de priorité précédent et/ou dans le cas où le futur pointeur de priorité suivant est différent du pointeur de priorité suivant, cela signifie qu'un tri de l'élément sélectionné doit être réalisé. Lorsqu'il y a compatibilité avec le résultat de l'exécution de l'étape de sélection sans opération de tri, l'élément sélectionné est déplacé directement à l'emplacement correspondant au futur pointeur de priorité précédent et au futur pointeur de priorité suivant. En cas d'incompatibilité, un tri partiel tel que décrit précédemment peut être mis en oeuvre ou l'étape de sélection peut être exécutée sans opération de tri.

A l'étape 44, les premières commandes sont transmises par le circuit de commande maître BMS aux circuits de commande esclaves des étages E₁ à E_{N} par le bus de transmission de données BUS. Le procédé se poursuit à l'étape 46.

Si, à l'étape 40, une nouvelle consigne C n'a pas été reçue, le procédé se poursuit à l'étape 46. Un tel mode de réalisation peut être adapté dans le cas où les circuits de commande esclaves 10 sont adaptés à maintenir les signaux qu'ils fournissent en l'absence de nouveaux ordres.

A titre de variante, l'étape 40 peut ne pas être présente et les étapes 42 et 44 peuvent être exécutées à chaque cycle. Lorsque la consigne C ne varie pas, les premières commandes peuvent être néanmoins déterminées à l'étape 42 pour suivre la valeur inchangée de la consigne C et ces premières commandes sont transmises à l'étape 44 par le circuit de commande maître BMS aux circuits de commande esclaves des étages E₁ à E_{N} par le bus de transmission de données BUS.

A l'étape 46, le circuit de commande maître BMS effectue une opération de tri de l'un des éléments de la liste de tri. Selon un mode de réalisation, le circuit de commande maître BMS détermine, pour le premier élément de la liste de tri, si le pointeur de priorité précédent est égal au futur pointeur de priorité précédent et si le pointeur de priorité suivant est égal au futur pointeur de priorité suivant. Si tel est le cas, cela signifie que l'élément considéré est bien placé dans la liste de sélection à laquelle il appartient. Le premier élément est alors retiré de la liste de tri et l'élément suivant de la liste de tri est considéré. Si tel n'est pas le cas, cela signifie que l'élément considéré n'est pas bien placé dans la liste de sélection. L'opération de tri de l'élément considéré peut alors être réalisée comme cela a été décrit précédemment à l'étape 42 pour l'élément sélectionné. En particulier, un tri partiel peut être mis en oeuvre. Selon un autre mode de réalisation, une opération de tri est réalisée de la façon suivante. Lorsque le futur pointeur de priorité précédent et le pointeur de priorité précédent de l'élément sélectionné sont différents, c'est l'élément sélectionné qui est déplacé dans les listes de sélection pour que le pointeur précédent de l'élément sélectionné devienne égal au futur pointeur précédent de l'élément sélectionné. Lorsque le futur pointeur de priorité suivant et le pointeur de priorité suivant de l'élément sélectionné sont différents, c'est l'élément désigné par le futur pointeur de priorité suivant de l'élément sélectionné qui est déplacé dans les listes de sélection pour que le pointeur de priorité précédent de l'élément désigné par le futur pointeur de priorité suivant de l'élément sélectionné désigne l'élément sélectionné. Ceci permet, de façon avantageuse, d'éviter des déplacements répétés indésirable d'un même élément entre deux positions.

Si l'élément considéré ne doit pas être changé de liste de sélection mais seulement être déplacé dans la même liste de sélection, le circuit de commande maître BMS déplace cet élément, par exemple en le retirant de la liste de sélection où il se trouve et en l'insérant dans cette même liste de sélection à la bonne place. Si l'élément considéré doit être changé de liste de sélection, il est retiré de la liste de sélection où il se trouve et est inséré dans une autre liste de sélection à la bonne place.

Lorsque le déplacement d'un élément suite à une opération de tri va entraîner une modification du nombre total de cellules connectées de la batterie 5, il est nécessaire d'effectuer le déplacement d'un autre élément pour que le nombre total de cellules connectées reste constant. La connexion ou la déconnexion de cet autre élément peut être réalisé comme cela a été décrit précédemment à l'étape 42. A titre d'exemple, si un élément est déplacé dans la liste de cellules valides décrite précédemment d'une position correspondant à une cellule connectée à une position correspondant à une cellule déconnectée, le circuit de commande maître BMS peut déplacer le pointeur du dernier élément connecté sur l'élément suivant de façon à entraîner la connexion d'une cellule supplémentaire. Selon un autre exemple, si un élément est déplacé de la liste de cellules connectées vers la liste de cellules déconnectées décrites précédemment, le premier élément de la liste de cellules déconnectées peut être déplacé dans la liste de cellules connectées. Selon un mode de réalisation, une opération de tri de l'élément déplacé est en outre réalisée. Le procédé se poursuit à l'étape 48.

A l'étape 48, le circuit de commande maître BMS détermine si l'étape 46 de tri nécessite la transmission de deuxièmes commandes de connexion/déconnexion aux circuits de commande esclaves des étages E₁ à E_{N}. Si l'étape 46 de tri partiel ne nécessite pas la transmission de deuxièmes commandes de connexion/déconnexion, le procédé se poursuit à l'étape 40 ce qui clôt le cycle. Si l'étape 46 de tri partiel nécessite la transmission de deuxièmes commandes de connexion/déconnexion, le procédé se poursuit à l'étape 50.

A l'étape 50, le circuit de commande BMS détermine des deuxièmes commandes pour suivre l'opération de tri. Le procédé se poursuit à l'étape 52.

A l'étape 52, les deuxièmes données sont transmises par le circuit de commande maître BMS aux circuits de commande esclaves des étages E₁ à E_{N} par le bus de transmission de données BUS. Le procédé se poursuit à l'étape 40 ce qui clôt le cycle.

Dans le mode de réalisation précédent, une seule opération de tri est réalisée par cycle. A titre de variante, les étapes 46 à 50 peuvent être répétées un nombre déterminé de fois par cycle.

Selon un mode de réalisation du procédé de transmission de données sur le bus BUS, une première ou deuxième commande transmise par le circuit de commande maître BMS est adressée au circuit de commande esclave 12 d'un seul module Eᵢ. Le circuit de commande esclave 12 de chaque module Eᵢ est alors adapté à déterminer si la commande qu'il reçoit lui est destiné. Si cela est le cas, le circuit de commande esclave 12 commande les circuits de pilotage 14 et 16 pour appliquer les ordres de connexion/déconnexion demandés par le circuit de commande maître BMS. A titre d'exemple, les commandes sont transmises sous la forme de trames, chaque trame comprenant un entête contenant l'adresse du module Eᵢ désigné suivi d'octets relatifs à la commandes des interrupteurs, et éventuellement suivis d'au moins un octet de contrôle. Un avantage d'un tel mode de réalisation est que la réactivité de la batterie 5 à réception d'une nouvelle consigne C est optimale. En outre, les commutations des interrupteurs des modules Eᵢ sont étalées dans le temps de sorte que la génération de perturbations électromagnétiques est réduite. En outre, un contrôle d'erreur de trame efficace peut être mis en oeuvre.

Selon un autre mode de réalisation du procédé de transmission de données, chaque trame transmise par le circuit de commande maître BMS contient l'ensemble des ordres de connexion/déconnexion pour toutes les cellules Cₖ de tous les modules Eᵢ. Le circuit de commande esclave 12 de chaque module Eᵢ est donc sollicité à chaque trame envoyée par le circuit de commande maître BMS. Le circuit de commande esclave 12 de chaque module Eᵢ est adapté à analyser la trame en extraire les ordres de connexion/déconnexion des interrupteurs appartenant au module Eᵢ.

Dans le mode de réalisation décrit précédemment, les premières commandes sont transmises à l'étape 44 et les deuxièmes commandes sont transmises à l'étape 52. A titre de variante, les premières et deuxièmes commandes peuvent être transmises à l'étape 52. Dans ce cas, le circuit de commande maître BMS peut déterminer si un circuit de commande esclave 12 est sollicité par des commandes différentes et peut déterminer une seule commande pour ce circuit de commande esclave 12 intégrant les différentes commandes.

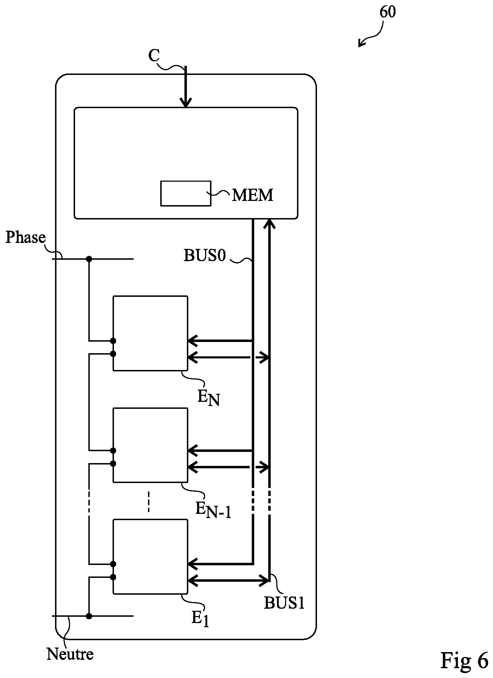

La figure 6 représente un mode de réalisation d'une batterie 60. La batterie 40 comprend l'ensemble des éléments de la batterie 5 représentée en figure 1 à la différence que le bus de transmission de données BUS est remplacé par deux bus de transmission de données BUSO et BUS1 qui relient chacun le circuit de commande maître BMS à chaque module E₁ à E_{N}.

Le bus de transmission de données BUSO est un bus rapide, c'est-à-dire un bus sur lequel des données sont transmises avec un débit supérieur à 3 mégabits par seconde, de préférence compris entre 5 mégabits par seconde et 7 mégabits par seconde. Le bus de transmission de données BUSO peut être un bus unidirectionnel. A titre d'exemple, le bus BUSO est un bus selon la norme RS485.

Le bus BUS1 est un bus lent, c'est-à-dire sur lequel des données sont transmises avec un débit inférieur à 3 mégabits par seconde, de préférence compris entre 0,5 mégabits par seconde et 1 mégabit par seconde. Le bus BUS1 est un bus bidirectionnel. A titre d'exemple, le bus BUS1 est un bus de données CAN, notamment selon la norme ISO 11898, qui de façon avantageuse intègre une gestion de l'arbitrage des communications.

Le bus rapide BUSO est utilisé pour la transmission des premières et deuxièmes commandes fournies par le circuit de commande maître BMS pour suivre la consigne C. Le bus lent BUS1 est utilisé pour l'échange de toutes les autres données entre le circuit de commande maître BMS et chaque module E₁ à E_{N}.

## Revendications

1. Procédé de commande d'un système électrique (5 ; 60) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄), correspondant chacune à un élément de stockage de charges électriques, et des interrupteurs (SW_{1,1}, SW_{2,1}, SW₃, SW₄) reliant les cellules électriques entre elles et aux troisième et quatrième bornes du module et un deuxième circuit de commande (12) des interrupteurs, le système électrique comprenant en outre au moins un premier bus de transmission de données (BUS ; BUSO, BUS1) reliant le premier circuit de commande à chaque deuxième circuit de commande, le premier circuit de commande comprenant une mémoire (MEM) dans laquelle sont stockées des listes chaînées, chaque liste chaînée comprenant des éléments comprenant chacun un identifiant de l'une des cellules électriques et au moins un premier pointeur désignant un autre élément de la liste chaînée, chaque liste chaînée comprenant un classement des identifiants de la liste chaînée selon au moins un critère choisi dans le groupe comprenant la température de la cellule électrique, le taux de charge de la cellule électrique, la tension aux bornes de la cellule électrique, l'impédance interne de la cellule électrique, et l'état de santé de la cellule, le procédé est **caractérisé par** les étapes successives suivantes :
a) réception par le premier circuit de commande (BMS) d'une consigne (C) ;
b) transmission, par le premier circuit de commande aux deuxièmes circuits de commande, de premières commandes de connexion ou de déconnexion d'au moins l'une des cellules électriques des modules pour suivre ladite consigne, les premières commandes étant déterminées à partir des listes chaînées ; et
c) transmission, par le premier circuit de commande aux deuxièmes circuits de commande, de deuxièmes commandes de connexion de l'une des cellules électriques et de déconnexion d'une autre cellule électrique parmi les cellules électriques, les deuxièmes commandes étant déterminées à partir des listes chaînées.

2. Procédé de commande selon la revendication 1, dans lequel la consigne est choisie dans le groupe comprenant une consigne de fourniture d'une tension entre les première et deuxième bornes (Phase, Neutre), une consigne de fourniture d'un courant à la première borne ou une consigne de nombre de cellules électriques.

3. Procédé de commande selon la revendication 1 ou 2, comprenant la détermination par le premier circuit de commande (BMS), pour au moins un premier élément parmi les éléments de l'une des listes chaînées, d'une nouvelle valeur d'un deuxième pointeur désignant un deuxième élément de la liste chaînée ou un troisième élément d'une autre liste chaînée, et dans lequel l'étape c) comprend les étapes successives suivantes :
d) déterminer si les premier et deuxième pointeurs dudit élément sont différents ; et
e) dans le cas où les premier et deuxième pointeurs sont différents, remplacer le premier pointeur par le deuxième pointeur et transmettre, par le premier circuit de commande (BMS) aux deuxièmes circuits de commande (12), des deuxièmes commandes de connexion ou de déconnexion de la cellule électrique correspondant à l'identifiant du premier élément.

4. Procédé de commande selon la revendication 3, dans lequel l'étape e) comprend, dans le cas de la connexion de la cellule électrique correspondant à l'identifiant du premier élément, la transmission de deuxièmes commandes de déconnexion de la cellule électrique correspondant à l'identifiant d'un cinquième élément et dans le cas de la déconnexion de la cellule électrique correspondant à l'identifiant du premier élément, la transmission de deuxièmes commandes de connexion de la cellule électrique correspondant à l'identifiant d'un cinquième élément.

5. Procédé de commande selon la revendication 3 ou 4, comprenant la détermination par le premier circuit de commande (BMS) d'une liste chaînée comprenant les éléments pour chacun desquels une nouvelle valeur du deuxième pointeur a été déterminée.

6. Procédé de commande selon l'une quelconque des revendications 1 à 5, dans lequel les étapes a), b) et c) sont répétées de façon cyclique, les étapes a) et b) n'étant pas présentes au moins pour un cycle lorsque la consigne ne varie pas audit cycle.

7. Procédé de commande selon l'une quelconque des revendications 1 à 6, dans lequel tous les éléments de l'une des listes chaînées comprennent des identifiants de cellules électriques qui sont connectées.

8. Procédé de commande selon l'une quelconque des revendications 1 à 7, dans lequel tous les éléments de l'une des listes chaînées comprennent des identifiants de cellules électriques qui sont non connectées et susceptibles d'être connectées.

9. Procédé de commande selon l'une quelconque des revendications 1 à 8, dans lequel tous les éléments de l'une des listes chaînées comprennent des identifiants de cellules électriques qui sont non connectées et mises en quarantaine.

10. Procédé de commande selon l'une quelconque des revendications 1 à 8, comprenant une première liste chaînée parmi les listes chaînées associée à une opération de charge du système électrique (5) et une deuxième liste chaînée parmi les listes chaînées associée à une opération de décharge du système électrique et l'utilisation, aux étapes b) et c), par le premier circuit de commande de la première liste chaînée lorsque le système électrique est en charge et de la deuxième liste chaînée lorsque le système électrique est en décharge.

11. Procédé de commande selon l'une quelconque des revendications 1 à 10, comprenant une étape d'allocation statique d'une partie de la mémoire (MEM) par le premier circuit de commande (BMS) dans laquelle sont stockées les listes chaînées.

12. Système électrique (5 ; 60) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄), correspondant chacune à un élément de stockage de charges électriques, et des interrupteurs reliant les cellules électriques entre elles et aux troisième et quatrième bornes du module et un deuxième circuit de commande (12) des interrupteurs, le système électrique comprenant en outre au moins un premier bus de transmission de données (BUS ; BUS0, BUS1) reliant le premier circuit de commande à chaque deuxième circuit de commande, le premier circuit de commande comprenant une mémoire (MEM) dans laquelle sont stockées des listes chaînées, chaque liste chaînée comprenant des éléments comprenant chacun un identifiant de l'une des cellules électriques et au moins un premier pointeur désignant un autre élément de la liste chaînée, chaque liste chaînée comprenant un classement des identifiants de la liste chaînée selon au moins un critère choisi dans le groupe comprenant la température de la cellule électrique, le taux de charge de la cellule électrique, la tension aux bornes de la cellule électrique, l'impédance interne de la cellule électrique, et l'état de santé de la cellule, le premier circuit de commande est **caractérisé par** la réalisation des fonctions suivantes:
a) recevoir une consigne (C) ;
b) transmettre aux deuxièmes circuits de commande des premières commandes de connexion ou de déconnexion d'au moins l'une des cellules électriques des modules pour suivre ladite consigne, les premières commandes étant déterminées à partir des listes chaînées ; et
c) transmettre aux deuxièmes circuits de commande des deuxièmes commandes de connexion de l'une des cellules électriques et de déconnexion d'une autre cellule électrique parmi les cellules électriques, les deuxièmes commandes étant déterminées à partir des listes chaînées.

13. Système électrique selon la revendication 12, comprenant un deuxième bus de transmission de données (BUS1) reliant le premier circuit de commande à chaque deuxième circuit de commande, dans lequel le premier circuit de commande est adapté à transmettre des premières données aux deuxièmes circuits de commande par le premier bus à un premier débit et est adapté à transmettre des deuxièmes données aux deuxièmes circuits de commande par le deuxième bus à un deuxième débit inférieur au premier débit.

## Patentansprüche

1. Ein Verfahren zum Steuern eines elektrischen Systems (5; 60), das eine erste Steuerschaltung (BMS) und eine Vielzahl von Modulen (Ei) aufweist, die in Reihe zwischen ersten und zweiten Anschlüssen (Phase, Neutral) angeordnet sind, wobei jedes Modul (Ei) dritte und vierte Anschlüsse (B+, B-) aufweist, wobei mindestens einer der dritten und vierten Anschlüsse jedes Moduls mit einem der dritten und vierten Anschlüsse eines anderen Moduls gekoppelt ist, wobei jedes Modul elektrische Zellen (C1, C2, C3, C4) aufweist, die jeweils einem elektrischen Ladungsspeicherelement entsprechen, und Schalter (SW1,1, SW2,1, SW3, SW4), die die elektrischen Zellen miteinander und mit den dritten und vierten Anschlüssen des Moduls koppeln, und eine zweite Schaltersteuerschaltung (12), wobei das elektrische System ferner mindestens einen ersten Datenübertragungsbus (BUS; BUS0, BUS1) aufweist, der die erste Steuerschaltung mit jeder zweiten Steuerschaltung koppelt, wobei die erste Steuerschaltung einen Speicher (MEM) aufweist, mit darin gespeicherten verketteten Listen, wobei jede verkettete Liste Elemente aufweist, die jeweils eine Kennung einer der elektrischen Zellen und mindestens einen ersten Zeiger aufweisen, der ein anderes Element in der verketteten Liste angibt, wobei jede verkettete Liste eine Klassifizierung der Kennungen der verketteten Liste gemäß mindestens einem Kriterium aufweist, das aus der Gruppe ausgewählt ist, die die Temperatur der elektrischen Zelle, den Ladezustand der elektrischen Zelle, die Spannung über die elektrische Zelle, die interne Impedanz der elektrischen Zelle und den Gesundheitszustand der elektrischen Zelle aufweist, wobei das Verfahren durch die folgenden Schritte gekennzeichnet ist:
a) Empfang durch die erste Steuerschaltung (BMS) eines Sollwerts (C);
b) Übertragung durch die erste Steuerschaltung an die zweiten Steuerschaltungen von ersten Steuersignalen für die Verbindung oder die Trennung von mindestens einer der elektrischen Zellen der Module, um dem Sollwert zu folgen, wobei die ersten Steuersignale basierend auf den verketteten Listen bestimmt werden; und
c) Übertragung durch die erste Steuerschaltung an die zweiten Steuerschaltungen von zweiten Steuersignalen für die Verbindung einer der elektrischen Zellen und die Trennung einer anderen elektrischen Zelle aus den elektrischen Zellen, wobei die zweiten Steuersignale basierend auf den verketteten Listen bestimmt werden.

2. Das Steuerungsverfahren nach Anspruch 1, wobei der Sollwert aus der Gruppe ausgewählt wird, die einen Sollwert für die Lieferung einer Spannung zwischen den ersten und zweiten Anschlüssen (Phase, Neutral), einen Sollwert für die Lieferung eines Stroms am ersten Anschluss oder einen Sollwert für die Anzahl von elektrischen Zellen aufweist.

3. Das Steuerungsverfahren nach einem der Ansprüche 1 oder 2, aufweisend die Bestimmung durch die erste Steuerschaltung (BMS) für mindestens ein erstes Element aus den Elementen einer der verketteten Listen eines neuen Wertes eines zweiten Zeigers, der ein zweites Element in der verketteten Liste oder ein drittes Element in einer anderen verketteten Liste bezeichnet, und wobei Schritt c) die folgenden aufeinanderfolgenden Schritte aufweist:
d) Bestimmen, ob der erste und der zweite Zeiger des Elements unterschiedlich sind; und
e) für den Fall, dass der erste und der zweite Zeiger unterschiedlich sind, Ersetzen des ersten Zeigers durch den zweiten Zeiger und Übertragen von der ersten Steuerschaltung (BMS) zu den zweiten Steuerschaltungen (12) von zweiten Steuersignalen für die Verbindung oder die Trennung der elektrischen Zelle entsprechend der Kennung des ersten Elements.

4. Das Steuerungsverfahren nach Anspruch 3, wobei Schritt e) für den Fall der Verbindung der elektrischen Zelle, entsprechend der Kennung des ersten Elements, Übertragen aufweist von zweiten Steuersignalen für die Trennung der elektrischen Zelle, entsprechend der Kennung eines fünften Elements, und für den Fall der Trennung der elektrischen Zelle, entsprechend der Kennung des ersten Elements, Übertragen aufweist von zweiten Steuersignalen für die Verbindung der elektrischen Zelle, entsprechend der Kennung eines fünften Elements.

5. Das Steuerungsverfahren nach Anspruch 3 oder 4, aufweisend die Bestimmung durch die erste Steuerschaltung (BMS) einer verketteten Liste, die Elemente aufweist, für die jeweils ein neuer Wert des zweiten Zeigers bestimmt wurde.

6. Das Steuerungsverfahren nach einem der Ansprüche 1 bis 5, wobei die Schritte a), b) und c) zyklisch wiederholt werden, wobei die Schritte a) und b) zumindest für einen Zyklus fehlen, wenn sich der Sollwert in diesem Zyklus nicht ändert.

7. Das Steuerungsverfahren nach einem der Ansprüche 1 bis 6, wobei alle Elemente einer der verketteten Listen Kennungen von elektrischen Zellen aufweisen, die miteinander verbunden sind.

8. Das Steuerungsverfahren nach einem der Ansprüche 1 bis 7, wobei alle Elemente einer der verketteten Listen Kennungen von elektrischen Zellen aufweisen, die nicht verbunden sind und verbunden werden können.

9. Das Steuerungsverfahren nach einem der Ansprüche 1 bis 8, wobei alle Elemente einer der verketteten Listen Kennungen von elektrischen Zellen aufweisen, die nicht verbunden und unter Quarantäne gestellt sind.

10. Das Steuerungsverfahren nach einem der Ansprüche 1 bis 8, aufweisend eine erste verkettete Liste aus den verketteten Listen, die mit einem Ladebetrieb des elektrischen Systems (5) verknüpft ist, und eine zweite verkettete Liste aus den verketteten Listen, die mit einem Entladebetrieb des elektrischen Systems verknüpft ist, und ferner aufweisend die Verwendung der ersten verketteten Liste in den Schritten b) und c) durch die erste Steuerschaltung, wenn das elektrische System in einem Ladebetrieb ist, und der zweiten verketteten Liste, wenn das elektrische System in einem Entladebetrieb ist.

11. Das Steuerungsverfahren nach einem der Ansprüche 1 bis 10, aufweisend einen Schritt der statischen Zuweisung eines Teils des Speichers (MEM) durch die erste Steuerschaltung (BMS), mit den darin gespeicherten verketteten Listen.

12. Ein elektrisches System (5; 60), das eine erste Steuerschaltung (BMS) und eine Vielzahl von Modulen (Ei) aufweist, die in Reihe zwischen ersten und zweiten Anschlüssen (Phase, Neutral) angeordnet sind, wobei jedes Modul (Ei) dritte und vierte Anschlüsse (B+, B-) aufweist, wobei mindestens einer der dritten und vierten Anschlüsse jedes Moduls mit einem der dritten und vierten Anschlüsse eines anderen Moduls gekoppelt ist, wobei jedes Modul elektrische Zellen (C1, C2, C3, C4), die jeweils einem elektrischen Ladungsspeicherelement entsprechen, und Schalter aufweist, die die elektrischen Zellen miteinander und mit den dritten und vierten Anschlüssen des Moduls koppeln, und eine zweite Schaltersteuerschaltung (12), wobei das elektrische System ferner mindestens einen ersten Datenübertragungsbus (BUS; BUS0, BUS1) aufweist, der die erste Steuerschaltung mit jeder zweiten Steuerschaltung koppelt, wobei die erste Steuerschaltung einen Speicher (MEM) aufweist, mit darin gespeicherten verketteten Listen, wobei jede verkettete Liste Elemente aufweist, die jeweils eine Kennung einer der elektrischen Zellen und mindestens einen ersten Zeiger aufweisen, der ein anderes Element in der verketteten Liste angibt, wobei jede verkettete Liste eine Klassifizierung der Kennungen der verketteten Liste gemäß mindestens einem Kriterium aufweist, das aus der Gruppe ausgewählt ist, die die Temperatur der elektrischen Zelle, den Ladezustand der elektrischen Zelle, die Spannung über der elektrischen Zelle, die innere Impedanz der elektrischen Zelle und den Gesundheitszustand der elektrischen Zelle aufweist, wobei die erste Steuerschaltung **dadurch gekennzeichnet ist, dass** sie die folgenden Funktionen ausführt:
a) Empfangen eines Sollwerts (C);
b) Übertragen an die zweiten Steuerschaltungen von ersten Steuersignalen für die Verbindung oder die Trennung von mindestens einer der elektrischen Zellen der Module, um dem Sollwert zu folgen, wobei die ersten Steuersignale basierend auf den verketteten Listen bestimmt werden; und
c) Übertragen an die zweiten Steuerschaltungen von zweiten Steuersignalen für die Verbindung einer der elektrischen Zellen und das Trennen einer anderen elektrischen Zelle aus den elektrischen Zellen, wobei die zweiten Steuersignale basierend auf den verketteten Listen bestimmt werden.

13. Das elektrische System nach Anspruch 12, das einen zweiten Datenübertragungsbus (BUS1) aufweist, der die erste Steuerschaltung mit jeder zweiten Steuerschaltung koppelt, wobei die erste Steuerschaltung in der in der Lage ist, erste Daten an die zweiten Steuerschaltungen über den ersten Bus mit einer ersten Rate zu übertragen, und in der Lage ist, zweite Daten an die zweiten Steuerschaltungen über den zweiten Bus mit einer zweiten Rate zu übertragen, die kleiner als die erste Rate ist.

## Claims

1. A method of controlling an electric system (5; 60) comprising a first control circuit (BMS) and a plurality of modules (Eᵢ) arranged in series between first and second terminals (Phase, Neutral), each module (Eᵢ) comprising third and fourth terminals (B+, B-), at least one of the third and fourth terminals of each module being coupled to one of the third and fourth terminals of another module, each module comprising electric cells (C₁, C₂, C₃, C₄), each corresponding to an electric charge storage element, and switches (SW_{1,1}, SW_{2,1}, SW₃, SW₄) coupling the electric cells to one another and to the third and fourth terminals of the module, and a second switch control circuit (12), the electric system further comprising at least one first data transmission bus (BUS; BUS0, BUS1), coupling the first control circuit to each second control circuit, the first control circuit comprising a memory (MEM) having chained lists stored therein, each chained list comprising elements each comprising an identifier of one of the electric cells and at least one first pointer designating another element in the chained list, each chained list comprises a classification of the identifiers of the chained list according to at least one criterium selected in the group comprising the temperature of the electric cell, the state of charge of the electric cell, the voltage across the electric cell, the internal impedance of the cell electric cell, and the state of health of the electric cell, the method being **characterized by** the steps of:
a) reception, by the first control circuit (BMS), of a set point (C);
b) transmission, by the first control circuit to the second control circuits, of first control signals for the connection or the disconnection of at least one of the electric cells of the modules to follow said set point, the first control signals being determined based on the chained lists; and
c) transmission, by the first control circuit to the second control circuits, of second control signals for the connection of one of the electric cells and the disconnection of another electric cell among the electric cells, the second control signals being determined based on the chained lists.

2. The control method according to claim 1, wherein the set point is selected from the group comprising a set point for the delivery of a voltage between the first and second terminals (Phase, Neutral), a set point for the delivery of a current at the first terminal, or a set point for the number of electric cells.

3. The control method according to any of claims 1 or 2, comprising the determination by the first control circuit (BMS), for at least one first element among the elements of one of the chained lists, of a new value of a second pointer designating a second element in the chained list or a third element in another chained list, and wherein step c) comprises the successive steps of:
d) determining whether the first and second pointers of said element are different; and
e) in the case where the first and second pointers are different, replacing the first pointer with the second pointer and transmitting, from the first control circuit (BMS) to the second control circuits (12), second control signals for the connection or the disconnection of the electric cell corresponding to the identifier of the first element.

4. The control method according to claim 3, wherein step e) comprises, in the case of the connection of the electric cell corresponding to the identifier of the first element, transmitting second control signals for the disconnection of the electric cell corresponding to the identifier of a fifth element and, in the case of the disconnection of the electric cell corresponding to the identifier of the first element, transmitting second control signals for the connection of the electric cell corresponding to the identifier of a fifth element.

5. The control method according to claim 3 or 4, comprising the determination by the first control circuit (BMS) of a chained list comprising elements for each of which a new value of the second pointer has been determined.

6. The control method according to any of claims 1 to 5, wherein steps a), b), and c) are repeated cyclically, steps a) and b) being absent at least for one cycle when the set point value does not vary at said cycle.

7. The control method according to any of claims 1 to 6, wherein all the elements of one of the chained lists comprise identifiers of electric cells which are connected.

8. The control method according to any of claims 1 to 7, wherein all the elements of one of the chained lists comprise identifiers of electric cells which are not connected and capable of being connected.

9. The control method according to any of claims 1 to 8, wherein all the elements of one of the chained lists comprise identifiers of electric cells which are not connected and placed in quarantine.

10. The control method according to any of claims 1 to 8, comprising a first chained list among the chained lists associated with an operation of charge of the electric system (5) and a second chained list among the chained lists associated with an operation of discharge of the electric system and the use, at steps b) and c), by the first control circuit, of the first chained list when the electric system is in charge mode and of the second chained list when the electric system is in discharge mode.

11. The control method according to any of claims 1 to 10, comprising a step of static allocation of a portion of the memory (MEM) by the first control circuit (BMS), having the chained lists stored therein.

12. An electric system (5; 60) comprising a first control circuit (BMS) and a plurality of modules (Eᵢ) arranged in series between first and second terminals (Phase, Neutral), each module (Eᵢ) comprising third and fourth terminals (B+, B-), at least one of the third and fourth terminals of each module being coupled to one of the third and fourth terminals of another module, each module comprising electric cells (C₁, C₂, C₃, C₄), each corresponding to an electric charge storage element, and switches coupling the electric cells to one another and to the third and fourth terminals of the module, and a second switch control circuit (12), the electric system further comprising at least one first data transmission bus (BUS; BUS0, BUS1), coupling the first control circuit to each second control circuit, the first control circuit comprising a memory (MEM) having chained lists stored therein, each chained list comprising elements each comprising an identifier of one of the electric cells and at least one first pointer designating another element in the chained list, each chained list comprises a classification of the identifiers of the chained list according to at least one criterium selected in the group comprising the temperature of the electric cell, the state of charge of the electric cell, the voltage across the electric cell, the internal impedance of the cell electric cell, and the state of health of the electric cell, the first control circuit being **characterized by** carrying out the following functions:
a) receiving a set point (C);
b) transmitting to the second control circuits first control signals for the connection or the disconnection of at least one of the electric cells of the modules to follow said set point, the first control signals being determined based on the chained lists; and
c) transmitting to the second control circuits second control signals for the connection of one of the electric cells and the disconnection of another electric cell among the electric cells, the second control signals being determined based on the chained lists.

13. The electric system according to claim 12, comprising a second data transmission bus (BUS1) coupling the first control circuit to each second control circuit, wherein the first control circuit is capable of transmitting first data to the second control circuits over the first bus at a first rate and is capable of transmitting second data to the second control circuits over the second bus at a second rate smaller than the first rate.
